Europäisches Patentamt

European Patent Office

Office européen des brevets

(11) Publication number: **0 422 714 A2**

## EUROPEAN PATENT APPLICATION

(21) Application number: **90202572.5**

(51) Int. Cl.⁵: **A23D 9/00, A23D 7/00**

(22) Date of filing: **28.09.90**

(30) Priority: **09.10.89 GB 8922718**
**01.03.90 GB 9004615**
**04.05.90 GB 9010131**

(43) Date of publication of application:
**17.04.91 Bulletin 91/16**

(84) Designated Contracting States:
**AT BE CH DE DK ES FR GB GR IT LI NL SE**

(71) Applicant: **UNILEVER NV**
**Burgemeester s'Jacobplein 1 P.O. Box 760**
**NL-3000 DK Rotterdam(NL)**
(84) **BE CH DE DK ES FR GR IT LI NL SE AT**

Applicant: **UNILEVER PLC**
**Unilever House Blackfriars P.O. Box 68**
**London EC4P 4BQ(GB)**
(84) **GB**

(72) Inventor: **Gabriel, Gerhard**
**Pattenserhauptstrasse 8**
**W-2090 Binsen(DE)**
Inventor: **Havenstein, Maria**
**Baumschulenweg 12**
**W-2000 Schenefeld(DE)**
Inventor: **Holemans, Pieter Maria Jozef**
**Schapendreef 3**
**B-2080 Kapellen(BE)**
Inventor: **Huffziger, Axel**
**Eberhofsteig 3b**
**W-2000 Hamburg 62(DE)**

(74) Representative: **Mulder, Cornelis Willem
Reinier, Dr. et al**
**UNILEVER N.V. Patent Division P.O. Box 137**
**NL-3130 AC Vlaardingen(NL)**

(54) **Edible fat composition.**

(57) Edible spreads are prone to microbiological spoilage by a number of organisms, including molds and bacteria as well as by physical changes occurring on storage. While the growth of these organisms and consequently the onset of spoilage can be inhibited by the use of preservatives, some consumers find preservatives unacceptable. We have determined that in edible fat products wherein the fat phase comprise a homogeneous dispersion of fine crystals and in which the fat phase is essentially free of crystalline aggregates spoilage is greatly reduced. Anhydrous products can be produced by melting the fat, substantially in the absence of an aqueous medium, cooling the melted fat to a temperature at which partial crystallization occurs, homogenising the partially crystallised fat, and, cooling the homogenised fat to further crystallise the fat. By means of a modified process it is possible to produce comprising 50-60% fat phase, 40-50% water phase, 0.1-1% lecithin, 0.01-1% salt, being essentially free of monoglycerides, proteins and sorbate salts, which are stable on storage.

EP 0 422 714 A2

## EDIBLE FAT COMPOSITION

The present invention falls in the technical field of edible fat compositions and relates to an edible fat composition with improved properties.

Edible fats are emulsified with water-phases to form edible spreads. While fat and water are the principal components of edible spreads other components (such as emulsifiers, thickeners, preservatives and anti-spattering agents), as are mentioned below, are included in product formulations to manipulate product properties.

Spreads are characterised by a wide range of physical product properties and organoleptic properties. Some of these properties are more important than others in consumer acceptance. In particular, good spreadability, keepability at ambient temperature, consistency both at storage and room temperature, mouth meltdown and oil-retention are important properties.

Keepability is known to be influenced by the water droplet distribution and water phase contents. Coarse emulsions containing bacterial and mould nutrients, such as proteins, generally have poor keepability. Fine emulsions are resistant to bacterial spoilage but are still succeptable to mould growth. Water phase distribution is influenced by processing conditions. Keepabilty can be improved markedly by cold-distribution and cold-storage, but this is not always practical. Keepabilty can also be improved by reducing the nutrient content or incorporating microbial growth inhibitors (such as salts and/or acids) in the product. However, reduction of protein content generally results in poor organoleptic properties and can influence processability of the emulsion. The use of preservatives, particularly substances such as potassium sorbate is commonplace, but is not acceptable to some groups of consumers. While is therefore known that both product composition and process conditions can influence the water-phase distribution, limited success has been enjoyed in the search for a combination of process conditions and product components which enable the manufacture of acceptable products of high physical and microbiological stability but with a very simple formulation.

One important physical parameter often employed to determine the physical stability of a fat containing product is the so-called "Stevens Value". The Stevens value of a fat is related to the firmness of a block of the fat at a particular temperature. Higher values are found in harder fats. While the hardness of the fat is determined principally by the degree of saturation of the component fatty acids, i.e. the chemical composition, the physical structure of the fat mass is also important in determining the eventual hardness.

In some circumstances it is desirable to provide fats which have a hardness as high as possible for a given chemical composition, and it has been suggested that irradiation with microwaves or other forms of heating can be used to induce specific forms of crystallization in the fat and thereby manipulate the Stevens value.

Such methods enable the production of firm fats which contain relatively low levels of hardstock (saturated fats) and thereby enable foodstuffs to be made with a reduced content of these saturated fats. In particular, it is important for bakery and kitchen fats to have a particular firmness but consumers of these fats are becoming increasingly conscious that the intake of saturated fat in the diet should be minimised.

A moderately high Stevens value is also of importance if gas is to be incorporated into a fat. If the Stevens value is too low, the gas will be lost from the body of the fat.

According to a one aspect of the present invention there is provided an edible fat product CHARACTERISED IN THAT the fat phase comprise a homogeneous dispersion of fine crystals and is essentially free of crystalline aggregates.

While the fat content of emulsions according to the present invention may range from 40% (halvarines) to 100% (shortenings), particularly good results are obtained when products are prepared with 50-70% fat. These "reduced fat spreads" are multi-functional in that they may be used in cooking for shallow frying and as spreads. The most preferred fat level for reduced fat spreads is around 60% fat. Very good results were also obtained with anhydrous products containing little or no water.

Typically, the product water-phase of such spreads further comprises a non-proteinaceous emulsifier system. Suitable emulsifiers are lecithin, monoglycerides and mixtures of one or more lecithins and one or more monoglycerides. The combination of both lectithins and monoglycerides results in stable products with a good, creamy consistency. The presence of these emulsifiers in the products of the present invention reduces oil exudation and improves so-called "second place keepability", at temperatures up to 25° C. Preferably, the emulsifier system is present at concentrations of 0.1-0.5%.

As mentioned below, spreads according to the present invention are stable in the absence of an emulsifier system. Thus, the emulsifier component is optional.

Products can contain salt, at a concentration of up to 2%. Salt is present for organoleptic reasons rather than as a preservative. In preferred embodiments the salt content is 0.01-1%, preferably below 0.2%.

Preferably, the edible spreads according to the present invention have a rather simple formulation and comprise vegetable fat, water, at least one non-proteinaceous emulsifier (preferably lecithin), ascorbic acid, vitamin A and vitamin E. It is observed that these particular formulations are free of both sorbic and lactic acids.

The fat phase N-line should preferably be as given in the following table, in which the first column gives a broad acceptable range and the second column a particularly preferred range.

| N10 | 25-40 | 29-31 |
| N15 | 22-30 | 22-24 |
| N20 | 14-21 | 14-16 |
| N25 | 8-12 | 8-10 |
| N30 | <6 | 2-4 |
| N35 | <2 | close to 0 |

Within the constraints of these physical properties considerable variation of fat phase composition is possible. Such variations enable both the production of both products suitable for packing in tubs or products suitable for packing in a wrapper. The use of vegetable fats is preferred due to their low content of saturated fatty acids, however the use of animal fats, such as butterfat and tallow is envisaged. In particular embodiments of the present invention, the fat phase comprises at least one liquid oil and at least one interesterified blend of palm and vegetable oils. It is also envisaged that simple non-hydrogenated and/or single component fat phases such as "high stearic" vegetable oils may be employed.

It is preferred that the vegetable fat employed should have a low level of trans fatty acids. This can be ensured by suitable selection of the fat phase.

The use of fat-replacers instead of a portion of the fat blend is not excluded. It is envisaged that the so-called sucrose fatty acid esters may replace some or all of the tri-glyceride fat phase of the spreads according to the present invention.

Quite surprisingly, we have determined that the products of the present invention may be manufactured without added emulsifiers while retaining many of the spreading and second place keepability benefits of the invention. This further reduces the number of ingredients which must be included in the product.

In the most preferred embodiments of the present invention, water-containg spreads are provided which have a rather simple basic formulation. Typically the formulation comprises a vegetable fat (preferably a low or zero trans vegetable fat), water, and at least one non-proteinaceous anti-spattering agent (preferably lecithin). Other minor components such as salt and colour will generally be present. It is observed that these particular formulations are free of both emulsifier (as such) and preservative.

The present invention also finds application in anhydrous-fat products, e.g. products suitable for use as shortenings or otherwise as culinary ingredients.

In an embodiment of the present invention, the fat is dosed with an at least moderately inert gas, such as air, $CO_2$, nitrogen or mixtures of the same. Dosing is preferably performed with nitrogen. The advantage of gas dosing is that it not only reduces the calorie content per unit volume of the product, but it makes the product less glossy and shiny, i.e. less like margarine and more like butter. Gas dosing is preferably performed between steps (a) and (b).

It has been found that 5-20%, preferably 10% of nitrogen, gives and acceptable dull colour to the product. In embodiments of the present invention, the increased Stevens value leads to the retention of more nitrogen in the product.

Accordingly a further aspect of the present invention subsits in a process for treatment of a fat which comprises:

a) melting the fat, substantially in the absence of an aqueous medium,
b) cooling the melted fat to a temperature at which partial crystallization occurs,
c) homogenising the partially crystallised fat, and,
d) cooling the homogenised fat to further crystallise the fat.

Without wishing to be bound by theory is believed that homogenization of step (c) disperses the alpha-crystalline fat in fine crystals and forms a large number of loci from which further crystallization may proceed. Homogenization should occur at a solid fat content of below 2.5% wt.

Melted fat can be supplied from a water or steam jacketed tank.

The preferred process line comprises one or more cooling units to perform step (b). "Votator" (RTM) "A-units" are suitable coolers although the use of cooling coils is not excluded. The cooling coils are followed by a homogenizer, to perform step (c) and the homogenizer followed by a crystallizer and other optional cooling units to perform step (d). A "Votator" (RTM) C-unit is suitable as a crystallizer.

Typically, homogenization (step (c)) is performed at a solids content of 0.5-2.5%, more preferably 1-2%.

Homogenization (step (c)) is preferably performed at temperatures of 15-25°C. Two stage homogenization being preferable with a pressure drop of 10-40 bar, preferably 15-30, most preferably 20 Bar.

Preferably, the product of step (d) is stored at 1-20°C, more preferably at 1-15°C. We have determined that the increase in Stevens value is most marked when the fat is stored at a temperature of around 5°C.

In order that the present invention may be further understood, it will be elaborated upon hereafter by means of example and with reference to the accompanying figures, wherein:

Figure 1: shows in schematic form, a spread production line for the production of spreads according to the present invention (fig 1B) and a spread production line for the production of spreads according to the prior art (fig 1A).

Figure 2: shows a graph relating eventual Stevens value and treatment method for anhydrous fat product according to the present invention.

Figure 3: shows a light microscope photomicrographic of product prepared by a method of the prior art, i.e. without the use of the homogeniser.

Figure 4 shows a light microscope photomicrograph of product according to the present invention.


EXAMPLE 1: PREPARATION OF A REDUCED FAT SPREAD:

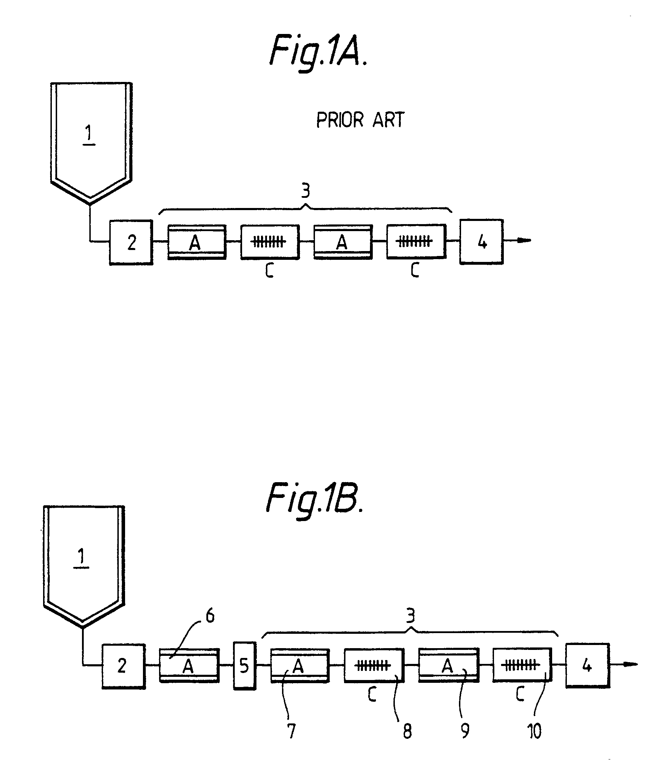

For comparative purposes figure 1A illustrates the method of the present invention in schematic form as compared with a method of the prior art. Service circuits have been omitted from the diagram for the sake of clarity.

In the method of the prior art (figure 1a) a premix is prepared in tank (1), Pasteurised in a heating unit (2) and fed into VOTATOR line (3). A conventional VOTATOR line consists of A units and C-units, and it is not uncommon for these to be arranged in an ACAC sequence. In this method of the prior art it is believed that inversion of the oil-in-water premix to the water-in-oil product occurs in the first C unit. Product emerges from the end of the line into packing machine (4).

Turning to figure 1B it can be seen that the apparatus according to the present invention is similar to that given in the comparative figure 1A. The same reference numerals have been used throughout. However a further VOTATOR A-unit (6) and a homogenizer (5) have been inserted into the process line.

In order to make a product according to the present invention premix was made up with the following formulation and processed according to the method given below. Here, as throughout the specification, all percentages are expressed in terms of weight.

| Fat Blend | 59.55% |
|---|---|
| Hymono 8803 | 00.15% (emulsifier) |
| Hymono 7804 | 00.10% (emulsifier) |
| Bolec CM | 00.20% (emulsifier) |
| NaCl | 00.15% |
| $\beta$-Carotene | 15ppm (colour) |
| H&R 53967 | 670ppm (flavour) |
| Water | 39.86% |

The premix was prepared by mixing together all the ingredients in a thermostatted tank (1) at 58-61°C. The premix was drawn from the tank with a booster pump (not shown) at a rate of 106 kg/hr and fed into an Votator (RTM) A-unit (6) with an process stream exit temperature of 16°C, and a service stream (liquid ammonia coolant) temperature of -20°C. From the A-unit, the product was fed into an APV Gaulin 300 series two-stage homogeniser (5) equipped with a high pressure pump. The pressure drop in the homogeniser was 35 Bar over each of the two stages, and the output temperature of the process stream was 26.5-29.5°C.

Variations in product properties obtained by variations of the homogenizer (5) temperature are

EP 0 422 714 A2

elaborated upon in example 2 below.

From the homogeniser (5), the product was fed into an ACAC sequence (3) of cooling and working units. The first A-unit (7) was supplied with liquid ammonia coolant at -6°C and cooled the process stream to 16-19°C. The first C-unit (8) could be operated at a rotational speed of between 150-800 rpm without difficultly and a product emerged at a temperature of 20-25°C; the degree of heating being determined by the extent of working. The second A-unit (9) was supplied with liquid ammonia coolant at a temperature of -20°C and cooled the process stream to a temperature of 14.5°C.

Variations in product properties obtained by variation of the exit temperature of the second A-unit (9) are elaborated upon in example 3 below.

The second C-unit (10) operated at 150 rpm and product emerged from this unit, for packing, at a temperature of 17.5°C. The packing operation was performed on a low shear packing machine (4) so as to avoid over-working the product.

Product properties were measured for a range of samples, manufactured according to the method of the present invention. Typical values are as follows:

| Stevens values | | |
|---|---|---|
| | 5°C | 360-293 |
| | 10°C | 315-217 |
| | 15°C | 107-78 |
| | 20°C | 37-44 |
| | 23°C | 20-13 |
| | 25°C | 13-15 |

The products showed acceptable spreading behaviour and excellent second place keepability.

Comparative Example 1

In order to compare the effects of homogenisation with non-homogenised products a composition as used in example 1 was processed through a "Votator" sequence of AACAAC to product a spread having as near as possible the same physical characteristics of the spread of example 1. The following results were obtained:

| Stevens values | Example 1 | | Comparison | |
|---|---|---|---|---|
| | (wk1) | (wk4) | (wk1) | (wk4) |
| 5°C | 288 | 432 | 331 | 332 |
| 10°C | 170 | 225 | 202 | 179 |
| 15°C | 91 | 145 | 127 | 76 |
| 20°C | 45 | 54 | 49 | 26 |
| 25°C | 20 | 20 | 22 | 12 |
| D 3,3 | 1.0 | 1.9 | 2.5 | 2.6 |
| Other properties: | | | | |
| taste | 6.9 | 6.9 | 6.9 | 7.0 |
| spreading | 1.5 | 1.5 | 2.0 | 2.0 |

It can be seen from these figures that there is no significant difference in the products of the present invention and those of the prior art as regards the Stevens values and their variation with time during storage under constant conditions. The taste of the products of the present invention is slightly better on this 1-10 scale.

Turning to second-place keepability, the following results were obtained for a spread prepared according to example 1 as compared with a spread prepared from an identical composition according to a

5

method of the prior art. The examples were repeated with both wrapper margarine fat blends (W) and tub margarine fat blends (T).

|  | Example 1 | | Comparative | |
|---|---|---|---|---|
|  | (T) | (W) | (T) | (W) |
| Consistency*: | | | | |
| 10°C | 7.0 | 7.5 | 6.5 | 6.5 |
| 20°C | 7.0 | 7.5 | 7.0 | 6.5 |
| 25°C | 6.5 | 6.5 | 5.0 | 6.0 |
| Oil exudation^: | | | | |
|  | 237 | 139 | 246 | 200 |

*measured after repeated temperature cycling from 10°C to 25°C over a period of seven days on a scale of 1-10.
^measured in mg oil.cm.cm. Lower scores are better.

It can be seen that the products of the present invention exhibit improved second-place keepability, especially when the consistency at higher temperatures is considered.

Microbiological assay after purposeful inoculation of the process stream with either penicillium spp. and paecilomyces revealed that the products of the present invention were much less able to support growth of these fat-splitting microbes, than products of the prior art. It is believed that this is due to the presence of fine interlocking crystals in the fat phase of the product which may prevent growth of the microbes.

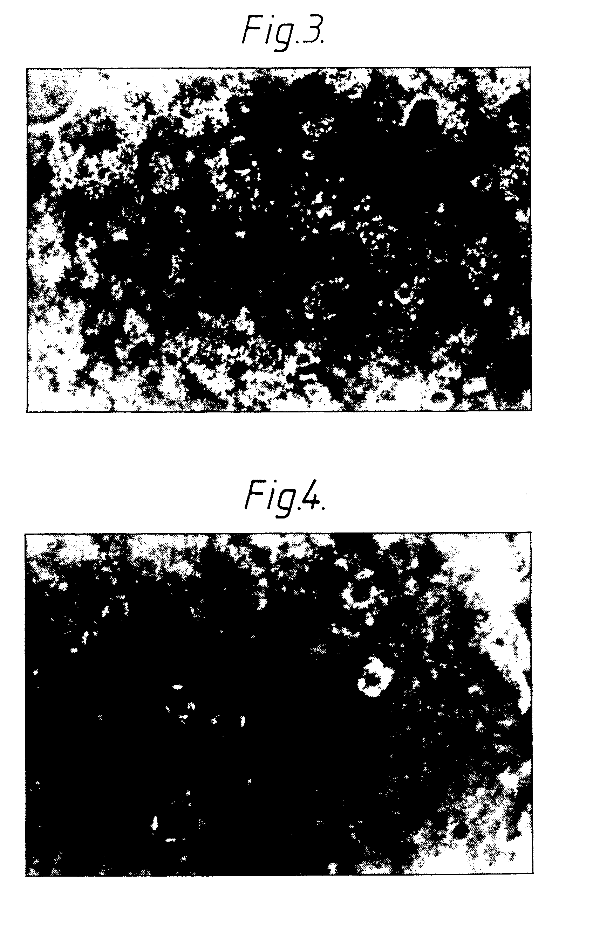

Light microscope studies were conducted to further investigate the crystalline structure of the products according to the invention. The results of comparative storage trials are shown in figures 3 and 4. In particular, figures 3 and 4 indicate that the crystal structure of samples prepared according to the prior art (fig. 3) have a typical margarine like structure comprising crystal "plates" of fat. Products according to the present invention (fig. 4) do not show this feature, but have a far finer crystal structure, which reveals itself as the "misty" regions in the photograph.

## EXAMPLE 2: PREPARATION OF ANHYDROUS FAT PRODUCTS

The following examples illustrate the present invention. The comparative example 2, indicated 'COMP', shows the physical properties obtained when a conventional processing route is followed.

The comparative example 'COMP' relates to a process as currently conducted in a factory, to produce a known white-fat product for use in kitchens and bakeries. It can be seen that irrespective of the storage temperature the Stevens value falls into a range from 27-17.

The fat employed in the example comprises 87%wt of a refined, liquid sunflower oil and 13%wt of an interesterified blend of 50%wt palm-kernel oil hydrogenated to a slip melting point of 39°C and 50%wt of palm oil hydrogenated to a slip melting point of 58°C.

The solids content of the fat employed in the experiments was as follows at the indicated temperatures:

| | |
|---|---|
| 10°C | 15.3% |
| 15°C | 13.1% |
| 20°C | 11.0% |
| 25°C | 7.3% |
| 30°C | 4.6% |
| 35°C | 3.0% |

In example "2A" a process line consisting of two 'A-units' followed by the homogenizer, followed by a further 'A-unit' and a 'C-unit' was employed. Other process conditions are given in the table. The throughput of the line was 80 kg/hr (laboratory scale). It can be seen that there was little difference in the Stevens

6

values obtained.

In example "2B" a process line consisting of two 'A-units' followed by the homogenizer, followed by a 'C-unit' was employed. Other process conditions are given in the table. The throughput of the line was 80 kg/hr (laboratory scale). It can be seen that there was little difference in the Stevens values obtained.

In example "2C" a process line consisting of two 'A-units' followed by the homogenizer, followed by a 'C-unit' was employed. Other process conditions are given in the table. The throughput of the line was increased to 200 kg/hr (pilot plant scale). It can be seen that a marked difference in the Stevens values was obtained.

In example "2D" a process line consisting of three 'A-units' followed by the homogenizer, followed by a 'C-unit' was employed. Other process conditions are given in the table. The throughput of the line was again 200 kg/hr (pilot plant scale). It can be seen that a marked difference in the Stevens values was again obtained.

No firm explanation can be offered for the clear difference between micro scale and pilot-plant scale, although it is believed that at low flow rates the effect of the homogeniser valve is reduced. These low flow rates are not found at factory scale but often occur at factory scale.

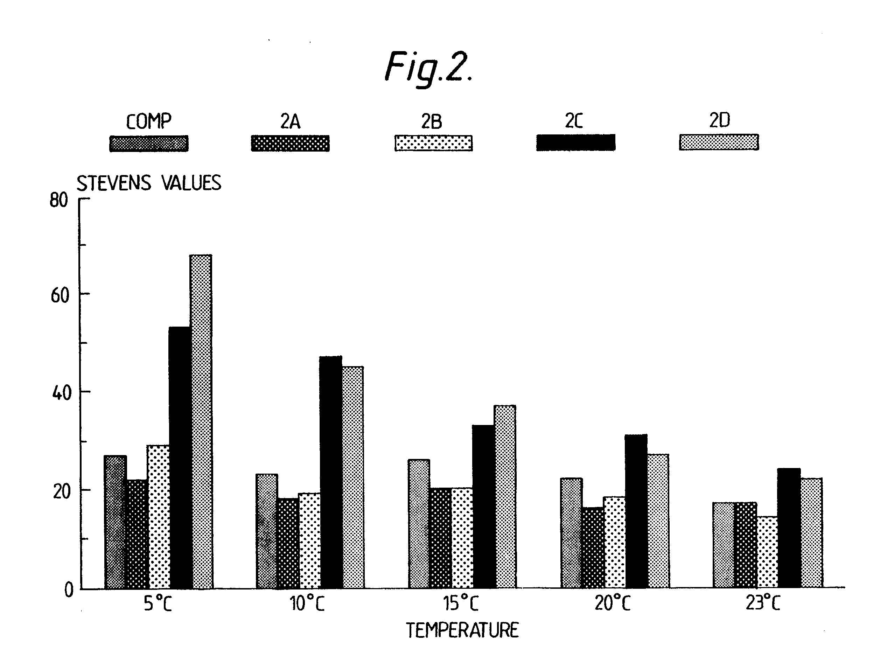

The graph (fig 2) shows the same results in another form. It can be seen that the process of examples "2C" and "2D" leads to a product with a marked improvement over both the control and the laboratory scale process. The improvement is most marked at lower storage temperatures, where it was possible to more than double the Stevens values of the end product.

TABLE 1

| | COMP | A | B | C | D |
|---|---|---|---|---|---|
| **S-values:** | | | | | |
| 5°C | 27 | 22 | 29 | 53 | 68 |
| 10°C | 23 | 18 | 19 | 47 | 45 |
| 15°C | 26 | 20 | 20 | 33 | 37 |
| 20°C | 22 | 16 | 18 | 31 | 27 |
| 23°C | 17 | 17 | 14 | 24 | 22 |
| **Consistency:** | | | | | |
| 10°C | 7 | 6.5 | 6 | 8 | 8 |
| 20°C | 6.5 | 6 | 6 | 7 | 6.5 |
| **Throughput (kg/hr):** | | 80 | 80 | 200 | 200 |
| **Processing Conditions:** | | | | | |
| Premix temp | | 50.5 | 49 | 45 | 45 |
| N2-dosing | | 10.5 | 10.5 | 10.5 | 10. |
| A1 prod. temp. | | 15 | 15 | 23 | 23 |
| A1 NH3 temp. | | -20 | -20 | -20 | -20 |
| A1 rpm | | 1200 | 1200 | 1200 | 1200 |
| A2 prod. temp | | 7 | 6 | 15.5 | 15.5 |
| A2 NH3 temp. | | -20 | -20 | -20 | -20 |
| A1 rpm | | 1200 | 1200 | 1200 | 1200 |
| A3 prod. temp. | | | | | 11.5 |
| A3 NH3 temp. | | | | | 0 |
| A3 rpm | | | | | 1200 |
| Homog. pressure | | 20 | 20 | 20 | 20 |
| Homog. temp. | | 19 | 13 | 18 | 14 |
| A3 prod temp. | | 5.5 | | | |
| A3 NH3 temp. | | -15 | | | |
| A3 rpm | | 1200 | | | |
| C1 prod temp. | | 8 | 15 | 18.5 | 15 |
| C1 rpm | | 750 | 750 | 1000 | 1000 |

## Claims

1) An edible fat product CHARACTERISED IN THAT the fat phase comprise a homogeneous dispersion of fine crystals and is essentially free of crystalline aggregates.

2) Edible fat product according to claim 1 further comprising a non-proteinaceous emulsifier system.

3) Edible fat product according to claim 1 further comprising at least one moderately inert gas, selected from the group comprising air, $CO_2$, nitrogen or mixtures of the same at a level of 5-20% by volume of product.

4) A process for treatment of a fat which comprises:

    a) melting the fat, substantially in the absence of an aqueous medium,

    b) cooling the melted fat to a temperature at which partial crystallization occurs,

    c) homogenising the partially crystallised fat, and,

    d) cooling the homogenised fat to further crystallise the fat.

5) A process according to claim 4 wherein step (c) is performed at a solids content of 0.5-10%.

6) A process according to claim 4 wherein step (c) is performed at temperatures of 15-25°C.

7) A process according to claim 4 wherein step (c) is performed over a pressure drop of 10-40 bar

8) A process according to claim 4 which further comprises the step of storing the product of step (d) at 1-20°C for a period in excess of 48 hours.

9) Product according to claim 1 comprising 0.1-1% lecithin and less than 0.01-1% sodium chloride.

10) Product according to claim 1 which is essentially free of monoglyceride.

11) Product according to claim 1 comprising 50-70% fat phase.

12) Product according to claim 1 comprising 50-60% fat phases 40-50% water phase, 0.1-1% lecithin, 0.01-1% salt, being essentially free of monoglycerides, proteins and sorbate salts.

13) Product according to claim 1 wherein the solid fat index at the indicated temperature is N10 25-40, N15 22-30, N20 14-21, N25 8-12, N30 <6 and N35 <2.

14) Product according to claim 1 comprising a dispersion of a 15-60%wt of a water phase in 40-85%wt of a continuous fat phase wherein the water phase has a D 3,3 below 2.5µ and a dropsize standard deviation below 2.

# Fig.1A.

PRIOR ART

# Fig.1B.

Fig.2.

*Fig.3.*

*Fig.4.*